# EUROPÄISCHE PATENTANMELDUNG

(11) **EP 4 343 936 A1**
(43) Veröffentlichungstag der Anmeldung: **27.03.2024**
(21) Anmeldenummer: 23196441.2
(22) Anmeldetag: 11.09.2023
(51) Int. Cl.: H01M 50/204, B65D 19/38

(54) **STAPELBARES LOGISTIKMODUL FÜR ALKALI-IONENBATTERIEN**

(30) Priorität: 16.09.2022 DE 102022123722
(71) Anmelder: Rhenus Automotive SE, 45133 Essen (DE)
(72) Erfinder: Karlstedt, Florian, 45359 Essen (DE); Brandl, Lukas, 45131 Essen (DE)
(74) Vertreter: Michalski Hüttermann & Partner Patentanwälte mbB

(57) **Zusammenfassung**

Die vorliegende Erfindung betrifft ein Logistiksystem zur Lagerung und zum Transport von Alkali-Ionen-Batterien aufweisend ein Trägermodul und mindestens einen Aufnahmebehälter für Alkali-Ionen-Batterien zur Aufnahme in das Trägermodul, wobei
a) das Trägermodul eine Rahmenkonstruktion aus mindestens einem Träger-Unterboden umfasst, wobei das Trägermodul an dem Träger-Unterboden mindestens eine Anschlussstelle zur Medienversorgung des Trägermoduls und innerhalb oder an der Rahmenkonstruktion verlaufende Medienversorgungsleitungen aufweist, wobei die Medienversorgungsleitungen sich von den Anschlüssen der Medienversorgung des Trägermoduls bis zu mindestens einer Aufnahme für einen Aufnahmebehälter erstrecken und dort eine Aufnahmebehälter-Anschlussstelle ausbilden, wobei die Medienversorgung des Trägermoduls ausgewählt ist aus der Gruppe bestehend aus flüssigen Löschmitteln, gasförmigen Löschmitteln, flüssigen Kühlmitteln, gasförmigen Kühlmitteln, elektrischen Signalleitungen, Stromleitungen oder Kombinationen mindestens zweier Medien daraus; und
b) der oder die Aufnahmebehälter mindestens eine Boden-, eine Kopf-, eine Rück- und zwei Seitenwände sowie eine bewegliche Vorderwand in Form einer Verschlussklappe aufweisen, wobei mindestens eine Wand des Aufnahmebehälters eine mit der Aufnahmebehälter-Anschlussstelle verbindbare Buchse umfasst, wobei der Aufnahmebehälter einen mit der Buchse verbindbaren Adapter umfasst, wobei der Adapter dazu eingerichtet ist eine elektrische und/oder hydraulische und/oder gasdichte Verbindung zwischen der Alkali-Ionen-Batterie und der Buchse für die Aufnahmebehälter-Anschlussstelle bereitzustellen. Des Weiteren erfindungsgemäß ist die Verwendung des erfindungsgemäßen Logistiksystems zur Lagerung oder zum Transport von Alkali-Ionen-Batterien.

## Beschreibung

Die vorliegende Erfindung betrifft ein Logistiksystem zur Lagerung und zum Transport von Alkali-Ionen-Batterien aufweisend ein Trägermodul und mindestens einen Aufnahmebehälter für Alkali-Ionen-Batterien zur Aufnahme in das Trägermodul, wobei
a) das Trägermodul eine Rahmenkonstruktion aus mindestens einem Träger-Unterboden umfasst, wobei das Trägermodul an dem Träger-Unterboden mindestens eine Anschlussstelle zur Medienversorgung des Trägermoduls und innerhalb oder an der Rahmenkonstruktion verlaufende Medienversorgungsleitungen aufweist, wobei die Medienversorgungsleitungen sich von den Anschlüssen der Medienversorgung des Trägermoduls bis zu mindestens einer Aufnahme für einen Aufnahmebehälter erstrecken und dort eine Aufnahmebehälter-Anschlussstelle ausbilden, wobei die Medienversorgung des Trägermoduls ausgewählt ist aus der Gruppe bestehend aus flüssigen Löschmitteln, gasförmigen Löschmitteln, flüssigen Kühlmitteln, gasförmigen Kühlmitteln, elektrischen Signalleitungen, Stromleitungen oder Kombinationen mindestens zweier Medien daraus; und
b) der oder die Aufnahmebehälter mindestens eine Boden-, eine Kopf-, eine Rück- und zwei Seitenwände sowie eine bewegliche Vorderwand in Form einer Verschlussklappe aufweisen, wobei mindestens eine Wand des Aufnahmebehälters eine mit der Aufnahmebehälter-Anschlussstelle verbindbare Buchse umfasst, wobei der Aufnahmebehälter einen mit der Buchse verbindbaren Adapter umfasst, wobei der Adapter dazu eingerichtet ist eine elektrische und/oder hydraulische und/oder gasdichte Verbindung zwischen der Alkali-Ionen-Batterie und der Buchse für die Aufnahmebehälter-Anschlussstelle bereitzustellen. Des Weiteren erfindungsgemäß ist die Verwendung des erfindungsgemäßen Logistiksystems zur Lagerung oder zum Transport von Alkali-Ionen-Batterien.

Zur erfolgreichen Markteinführung neuer Technologien ist es in der Regel notwendig, dass nicht nur ein neues Produkt mit verbesserten Eigenschaften oder zu günstigeren Kosten angeboten wird. Vielmehr ist es auch notwendig, dass im Umfeld des Produktes die Voraussetzungen geschaffen werden, welche eine einfache und verlässliche Nutzbarkeit des Produktes selbst erlauben. Dieser fundamentale Zusammenhang gilt umso mehr in den Fällen, in denen das Produkt oder Teile dessen ein potenzielles Sicherheitsrisiko für den Anwender oder die Logistik zur Bereitstellung des Produktes darstellen. Ein Beispiel für diese Wechselbeziehung kann zurzeit im Bereich der Mobilitätswende nachvollzogen werden. Der Wechsel von über Verbrennungsmotoren angetriebenen Fahrzeugen hin zur Elektro-Mobilität ist naturgemäß auch mit Änderungen im sicherheitsrelevanten Umfeld des Fahrzeugs verbunden. Während sich für Verbrennerfahrzeuge über die Jahre ein Netz an Tankstellen und eine sichere Belieferung dieser über Tanklastwagen entwickelt hat, ist die direkte Versorgung der Batterien von E-Fahrzeugen mit elektrischer Energie von diesem System unabhängig. Neben einer geeigneten Ladestruktur für die E-Fahrzeuge, muss aber im Laufe der Fahrzeuglebensdauer auch sichergestellt sein, dass sowohl bei der Herstellung wie auch bei dem Fahrzeugrecycling geeignet sichere und handhabbare Verfahren etabliert werden. Dies gilt im besonderen Maße für voll- oder teilgeladene Fahrzeugbatterien, welche losgelöst von dem Fahrzeugsystem aufgrund der derzeit speicherbaren Energiemengen eine potenziell nicht unbeträchtliche Gefahrenquelle für den Anwender und den Hersteller darstellen können. Während das sichere Handling der Batterien im Rahmen der Herstellung üblicherweise weniger Probleme bereitet, kann insbesondere das Recycling gebrauchter Batterien schwieriger sein, da der elektrische Status und die Unversehrtheit der einzelnen Zellen nicht bekannt sind. In diesen Fällen sind besondere Vorsichtsmaßnahmen geboten, welche ein sicheres Handhaben und eine sichere Logistik der Batterien erlauben.

Auch in der Patentliteratur finden sich einige Vorschläge zum sicheren Handling von Akkumulatoren.

EP 1 333 523 A2 offenbart beispielsweise ein Verfahren und eine Vorrichtung für die Demontage und die Lagerung von Alkalimetall enthaltender Objekte, wie Alkalimetall enthaltende Batterien. Das Dokument beschreibt ein Verfahren zum Zerlegen von alkalimetallhaltigen Substanzen enthaltenden Batterien oder Zellen, insbesondere lithiumhaltigen Batterien oder Zellen, in Gegenwart einer Schutzatmosphäre, dadurch gekennzeichnet, dass die Schutzatmosphäre eine Kohlendioxidatmosphäre ist.

Weiterhin wird in der WO 2011 015 411 A1 ein Verfahren zur Bekämpfung und/oder Vorbeugung eines Brandes einer oder mehrerer Batteriezellen, bevorzugt von Lithium-Ionen-Zellen, beschrieben, wobei das Verfahren sich dadurch auszeichnet, dass eine wässrige Lösung eines Kalzium-Salzes und ein Gel-Löschmittel angewendet werden.

Die WO 2014 190 180 A1 beschreibt ein Batteriemanagementsystem mit thermisch integrierter Brandunterdrückung, umfassend: ein Gehäuse, eine Vielzahl einzelner Batteriezellen in dem Gehäuse; eine Vielzahl von Kühlkanälen in dem Gehäuse innerhalb oder zwischen der Vielzahl von einzelnen Batteriezellen; eine Vielzahl von Sensoren, die betriebsfähig mit den einzelnen Batteriezellen verbunden sind, wobei die Sensoren angepasst sind, um ein thermisches Durchgehen zu erkennen, das sich auf eine oder mehrere der Vielzahl von einzelnen Batteriezellen bezieht; und ein Managementsystem, das zum Einspritzen von Kühlmittel in mindestens einen der Vielzahl von Kühlkanälen bei der Detektion des thermischen Durchgehens durch einen beliebigen der mehreren Sensoren geeignet ist, so dass das thermische Durchgehen schnell gelöscht wird.

Derartige aus dem Stand der Technik bekannte Lösungen können noch weiteres Verbesserungspotential bieten. Dies bezieht sich insbesondere auf die sichere Lagerung und den sicheren Transport neuer und insbesondere gebrauchter Alkali-Ionen-Batterien mit ungewissem elektrischem Status.

Es ist daher die Aufgabe der vorliegenden Erfindung, die aus dem Stand der Technik bekannten Nachteile zumindest teilweise zu überwinden. Es ist insbesondere die Aufgabe der vorliegenden Erfindung ein Logistiksystem bereitzustellen, welches flexibel eine große Menge unterschiedlicher Batterietypen handhaben und im Falle des Versagens elektrischer Hardware diese für den Benutzer sichern kann.

Die Lösung der Aufgabe erfolgt durch die Merkmale der unabhängigen Ansprüche, gerichtet auf das erfindungsgemäße Logistikmodul, sowie die erfindungsgemäße Verwendung des Moduls zur Lagerung oder zum Transport von Alkali-Ionen-Batterien. Bevorzugte Ausgestaltungen der Erfindung sind in den Unteransprüchen, in der Beschreibung oder den Figuren angegeben, wobei weitere in den Unteransprüchen, in der Beschreibung oder den Figuren beschriebene oder gezeigte Merkmale einzeln oder in einer beliebigen Kombination einen Gegenstand der Erfindung darstellen können, solange sich aus dem Kontext nicht eindeutig das Gegenteil ergibt.

Erfindungsgemäß ist ein Logistiksystem zur Lagerung und zum Transport von Alkali-Ionen-Batterien aufweisend ein rechteckiges oder quadratisches Trägermodul und mindestens einen Aufnahmebehälter für Alkali-Ionen-Batterien zur Aufnahme in das Trägermodul, wobei
a) das Trägermodul eine Rahmenkonstruktion aus mindestens einem Träger-Unterboden umfasst, wobei das Trägermodul an dem Träger-Unterboden mindestens eine Anschlussstelle zur Medienversorgung des Trägermoduls und innerhalb oder an der Rahmenkonstruktion verlaufende Medienversorgungsleitungen aufweist, wobei die Medienversorgungsleitungen sich von den Anschlüssen der Medienversorgung des Trägermoduls bis zu mindestens einer Aufnahme für einen Aufnahmebehälter erstrecken und dort eine Aufnahmebehälter-Anschlussstelle ausbilden, wobei die Medienversorgung des Trägermoduls ausgewählt ist aus der Gruppe bestehend aus flüssigen Löschmitteln, gasförmigen Löschmitteln, flüssigen Kühlmitteln, gasförmigen Kühlmitteln, elektrischen Signalleitungen, Stromleitungen oder Kombinationen mindestens zweier Medien daraus; und
b) der oder die Aufnahmebehälter mindestens eine Boden-, eine Kopf-, eine Rück- und zwei Seitenwände sowie eine bewegliche Vorderwand in Form einer Verschlussklappe aufweisen, wobei mindestens eine Wand des Aufnahmebehälters eine mit der Aufnahmebehälter-Anschlussstelle verbindbare Buchse umfasst, wobei der Aufnahmebehälter einen mit der Buchse verbindbaren Adapter umfasst, wobei der Adapter dazu eingerichtet ist eine elektrische und/oder hydraulische und/oder gasdichte Verbindung zwischen der Alkali-Ionen-Batterie und der Buchse für die Aufnahmebehälter-Anschlussstelle bereitzustellen.

Überraschenderweise wurde festgestellt, dass sich über oben angegebenes Logistiksystem elektrische Akkumulatoren, und hier insbesondere Alkali-Ionenbatterien, sicher handhaben und lagern lassen. Das System ist also insbesondere dazu geeignet, dass Batterien sicher von einem zu einem anderen Ort transportiert werden können. Dazu können die Batterien in das Logistiksystem eingelagert und das System als Ganzes, mit den eingelagerten Batterien, transportiert werden. Das Logistiksystem ist dabei so flexibel, dass ein einzelnes, mehrere baugleiche oder aber auch mehrere unterschiedliche Batterien gleichzeitig transportiert werden können. Insbesondere sind die einzelnen Logistiksysteme stapelbar ausgebildet, so dass die Logistiksysteme übereinander oder nebeneinander transportiert werden können. Durch die Ausgestaltung des Logistiksystems ist insbesondere sichergestellt, dass auch bei einem Stapeln mehrerer Logistiksysteme die einzelnen Systeme ihre Sicherheitsfunktionen zuverlässig ausführen können. Dieselben Sicherheitsfunktionen werden auch im Rahmen einer Lagerhaltung bereitgestellt, wobei auch in diesem Fall mehrere Logistiksysteme übereinander oder nebeneinander gestapelt werden können. Vorteilhafterweise kann das Logistiksystem aufgrund seiner Flexibilität eine Vielzahl unterschiedlich ausgebildeter Batterietypen aufnehmen. Zurzeit mangelt es für die unterschiedlichen Batterietypen einer gemeinsamen Standardisierung, so dass das hier beschriebene System so flexibel aufgebaut ist, dass auch unterschiedliche Batterien unterschiedlicher Hersteller mit unterschiedlichen elektrischen Aufbauten sicher gehandhabt werden können. Zudem bietet das System den Vorteil, dass einige der sicherheitstechnischen Anlagen auf das Logistiksystem ausgelagert werden können. Es ist also nicht mehr zwingend nötig, dass die Batterien selbst weitere Schutzmaßnahmen für die Lagerung und den Transport aufweisen. Diese Schutzmaßnahmen sind universell, für sämtliche Batterietypen, in dem erfindungsgemäßen Logistiksystem integriert. Der beschriebene Aufbau des Logistiksystems eignet sich insbesondere zur Handhabung defekter, gebrauchter und/oder zum Recycling vorgesehener Batterien. Für diese Batterien am Ende ihrer Nutzungsdauer ist es in der Regel unklar, ob schon Fehlfunktionen in der Batterie-Hardware vorliegen. Aufgrund des unklaren Hardware-Status muss im Bereich der Handhabung und der Lagerung eine besondere Vorsicht an den Tag gelegt werden. Üblicherweise werden diese Batteriemodule heutzutage in größeren Kartonagen auf Paletten gelagert, wobei das Erfassen des Batteriestatus in diesem Fall von außen durch die Umverpackung unmöglich oder doch sehr eingeschränkt ist. Hinzu kommt, dass bei einem elektrischen Versagen einer einzelnen Batterie, üblicherweise auch die gesamte Lagereinheit betroffen wird. Dies kann bei der Lagerung sehr schnell zu einem thermischen Durchgehen führen, welches am Ende des Tages in einem Brand der gesamten Lagereinheit oder Palette führen kann. Durch den erfindungsgemäßen Aufbau des Logistiksystems mit einzelnen Aufnahmebehälter für jeweils einzelne Batterien, kann in einem solchen Gesamtversagen der Lagereinheit sehr gut begegnet werden. Insbesondere ist über den Aufbau des erfindungsgemäßen Logistiksystem sichergestellt, dass der Status einer einzelnen Batterie separat und individuell erfassbar ist. Die spezifischen Informationen können an das Trägermodul weitergegeben und vom Trägermodul oder einer daran angeschlossenen Datenverarbeitungsvorrichtung entsprechende Gegenmaßnahmen getroffen werden. Hierbei ist es von besonderem Vorteil, dass die Erfassung des Batteriestatus unabhängig von der Hardware der Batterie selbst durch das Logistiksystem erfolgen kann. So kann mit nur einem Aufbau der Status unterschiedlicher Batterietypen überwacht werden und dies unabhängig vom Aufbau und unabhängig davon, ob die Funktionstüchtigkeit einzelner Batterien gewährleistet ist oder nicht. Die Isolierung der einzelnen Batterien führt in den Aufnahmebehältern zudem dazu, dass ein Gesamtversagen der Lagereinheit nicht mehr stattfinden kann. Einzelne, schadhafte Batterien können identifiziert und im Versagensfall auftretende Gefahren direkt mit geeigneten Gegenmaßnahmen bekämpft werden. Die Module sind dabei so ausgestaltet, dass diese nicht nur stationär, sondern auch bei Änderungen des Lagerortes während eines Transportes sicher gehandhabt werden können. Den während eines Ortswechsels oder Transports auftretenden Gefahren kann sicher begegnet und einzelne Batterie-Gefahrenquellen sicher gehandhabt werden. Dies ist ein deutlicher Vorteil, da ein aufwendiges und gefährliches Umverpacken für den Transportweg entfallen kann. Die Anschlusssituation kann auch durch Fahrzeuge wie etwa LKW oder Flugzeuge sicher gewährleistet werden. Ein weiterer Vorteil besteht insbesondere auch darin, dass ein thermisches und/oder ein elektrisches Versagen einzelner Batterien sicher erkannt und mit geeigneten Abwehrmaßnahmen begegnet werden kann. Insbesondere kann eine temperaturabhängige Kühlung der Batterie initiiert und gleichzeitig eine elektrische Entladung der Batterie angestoßen werden. Es ergibt sich ein "intelligentes" System, welches bedarfsgerecht schadhafte Batterien detektieren und Gegenmaßnahmen auf elektrischer und thermischer Ebene einleiten kann.

Das erfindungsgemäße Logistiksystem eignet sich zur Lagerung und zum Transport von Alkali-Ionen-Batterien. Das erfindungsgemäße Logistiksystem kann also insbesondere dazu genutzt werden, mehrere Batterien zum Lagern oder Transportieren zusammenzufassen und diese als Logistikeinheit zu behandeln. Das Logistiksystem kann prinzipiell jedwede Art elektrischer Energiespeicher handhaben, eignet sich aber insbesondere für die Aufbewahrung und den Transport von Alkali-Ionen-Batterien. Die Alkali-Ionen-Batterien zeigen ein eigenes Gefährdungspotential und Alterungsverhalten, worauf das Logistiksystem insbesondere auf die auftretenden Gefährdungen ausgelegt ist. Alkali-Ionen-Batterien sind wiederaufladbare Batterien, wobei die Aufnahme oder Abgabe elektrischer Energie durch Ein- oder Auslagerung von Alkali- oder Erdalkali-Ionen in die entsprechenden Elektroden der Batterie erfolgt. Für Ionen-Batterien geeignete Alkali- oder Erdalkali-Elemente finden sich in den entsprechenden Hauptgruppen des Periodensystems. Das System kann dabei rein stationär oder aber auch im Aufstellungsort flexibel gehandhabt werden. Somit kann ein aufwendiges Umverpacken der Batterien für einen Ortswechsel entfallen. Durch das erfindungsgemäße System wird also ein konstantes Sicherheitsniveau, auch bei einem Wechsel des Batterieortes bereitgestellt. Dies gelingt insbesondere durch die Separierung und die Wahl der Anschlusspositionen zwischen Modul und Behälter.

Das System weist ein rechteckiges oder quadratisches Trägermodul auf. Das Trägermodul bildet die Grundstruktur des Logistiksystems, wobei diese Grundstruktur über die Aufnahmebehälter mittelbar die einzelnen Batterien aufnimmt. Die Grundfläche des Trägermoduls kann prinzipiell eine variable Größe aufweisen, wobei zweckmäßigerweise die Größe des Trägermoduls sich an der Größe der einzulagernden Batterien orientiert. So kann das Trägermodul beispielsweise eine Grundfläche von größer oder gleich 0,5 m², des Weiteren bevorzugt von größer oder gleich 1 m² und weiterhin bevorzugt von größer oder gleich 2 m² aufweisen. Sollen kleinere Batterien gelagert oder transportiert werden, so können die Größe natürlich nach unten hin angepasst werden. Die Grundfläche des Trägermoduls kann dabei entweder quadratisch oder aber auch rechteckig sein. Diese Form haben sich für eine Lagerung, den Transport und insbesondere für ein Stapeln mehrerer Behälter übereinander als besonders geeignet herausgestellt. Die Höhe des Trägermoduls kann sich ebenfalls als Funktion der Größe und der Anzahl der zu startenden Batterieeinheiten ergeben. So kann das Trägermodul beispielsweise mehr als eine, des Weiteren mehr als 6 und weiterhin bevorzugt mehr als 10 Batterieeinheiten übereinander oder über- und nebeneinander aufnehmen. Das Trägermodul können dabei wahlweise eine vertikale oder aber auch mehrere vertikale Reihen an Batterien nebeneinander aufnehmen. Dadurch kann das Trägermodul inklusive Aufnahmebehälter beispielsweise ein Volumen von größer oder gleich 1 m³, des Weiteren bevorzugt größer oder gleich 2 m³ und weiterhin bevorzugt größer oder gleich 4 m³ umfassen. Bevorzugt kann die Geometrie des Trägermoduls nach Aufnahme der Behälter entweder würfelförmig oder aber auch quaderförmig ausgestaltet sein.

Zudem weist das System mindestens einen Aufnahmebehälter für Alkali-Ionen-Batterien zur Aufnahme in das Trägermodul auf. Die einzelnen Alkali Ionen Batterien werden nicht als solche in das Trägermodul eingeschoben. Eine einzelne Alkali-Ionen-Batterie wird in einen Aufnahmebehälter eingeführt, welcher dann anschließend in das Trägermodul eingeführt werden kann. Als Funktion der Gesamtzahl der aufzunehmenden Alkali-Ionen-Batterien können dementsprechend mehrere Aufnahmebehälter in das Trägermodul aufgenommen werden. Es müssen Sie nicht sämtliche Plätze für Aufnahmebehälter in dem Trägermodul mit Aufnahmebehältern belegt sein.

Das System umfasst als Komponente a) das Trägermodul, wobei das Trägermodul eine Rahmenkonstruktion aus mindestens einem Träger-Unterboden umfasst, wobei das Trägermodul an dem Träger-Unterboden mindestens eine Anschlussstelle zur Medienversorgung des Trägermoduls und innerhalb oder an der Rahmenkonstruktion verlaufende Medienversorgungsleitungen aufweist, wobei die Medienversorgungsleitungen sich von den Anschlüssen der Medienversorgung des Trägermoduls bis zu mindestens einer Aufnahme für einen Aufnahmebehälter erstrecken und dort eine Aufnahmebehälter-Anschlussstelle ausbilden. Das Trägermodul stellt also mindestens einen Unterboden bereit, auf welchen eine oder mehrere Behälter abgelegt werden können. Der Unterboden kann beispielsweise in Form einer Palette ausgebildet sein, wobei die Palettenform noch weitere funktionale Einheiten aufweist. Der Träger-Unterboden kann dabei vollflächig, beispielsweise in Form eines Quaders vorliegen. Üblicherweise ist die Quaderhöhe deutlich kleiner als die Quaderbreite und -Tiefe. Der Träger-Unterboden kann aber auch aus einzelnen Streben ausgebildet sein, welche über eine Deckplatte miteinander verbunden sind. Der Unterboden kann bevorzugt aus Metall oder Kunststoff ausgebildet sein. Der Träger-Unterboden dient aber nicht nur zur mechanischen Stabilisierung, sondern bildet eine Anschlussstelle zur Zuführung einer oder mehrerer Medien. Die Anschlussstelle kann bevorzugt so ausgebildet sein, dass diese "automatisch" kontaktiert werden kann. Beispielsweise kann die Anschlussstelle am Boden oder an der Rückseite des Träger-Unterbodens vorliegen, sodass bei einem Stellen des Träger-Unterbodens eine geschlossene Verbindung zwischen der Medienversorgung des Träger-Unterbodens und einer externen Medienversorgung hergestellt wird. Es ist aber auch möglich, dass die Anschlussstelle an der Unterborden-Rückseite vorliegt, sodass der Träger-Unterboden in diese Eingeschoben werden kann. Die Medienversorgungsleitungen verlaufen dann von der Anschlussstelle innerhalb oder am Unterboden zur Aufnahmebehälter-Anschlussstelle. Im Falle der Aufnahme mehrerer Behälter kann der Träger-Unterboden eine Anschlussstelle oder sämtliche Anschlussstellen für sämtliche Aufnahmebehälter bereitstellen. Im ersteren Fall kann die Weiterleitung der Medien auch über die einzelnen Aufnahmebehälter erfolgen.

Die Medienversorgung des Trägermoduls ist aus der Gruppe bestehend aus flüssigen Löschmitteln, gasförmigen Löschmitteln, flüssigen Kühlmitteln, gasförmigen Kühlmitteln, elektrischen Signalleitungen, Stromleitungen oder Kombinationen mindestens zweier Medien daraus ausgewählt. Zur sicheren Handhabung und Lagerung sowie Transport von Alkali-Ionen-Batterien hat sich die Versorgung der Aufnahmebehälter mit oben genannten Medien als besonders geeignet herausgestellt. Durch die Zuführung dieser Medien in die Batterien oder aber in den eigentlichen Aufnahmeraum können ungewollte Betriebszustände der Batterie verhindert oder verzögert werden. Zudem ist es möglich, dass beispielsweise Brände einer Batterie auf einen kleinen Raum eingeschränkt oder aber auf eine kurze Dauer reduziert werden. Letzteres kann insbesondere durch die Zuführung flüssiger oder gasförmiger Löschmitteln in den Aufnahmeraum erreicht werden. Prinzipiell ist es aber auch möglich, dass eine Absaugung etabliert wird, welche beispielsweise die Luft aus den Aufnahmebehältern ganz oder teilweise entfernen kann.

Das System umfasst als Komponente b) den oder die Aufnahmebehälter, wobei ein Aufnahmebehälter mindestens eine Boden-, eine Kopf-, eine Rück- und zwei Seitenwände sowie eine bewegliche Vorderwand in Form einer Verschlussklappe aufweist, wobei mindestens eine Wand des Aufnahmebehälters eine mit der Aufnahmebehälter-Anschlussstelle verbindbare Buchse umfasst. Zur mechanischen und chemischen Isolierung der einzelnen Batterien werden diese in Aufnahmebehälter gegeben. Der Aufnahmebehälter bildet einen mechanischen Schutz und kann beispielsweise auch gasdicht ausgestaltet sein. Die Grundform und die Dimensionen des Aufnahmebehälters können sich an der Grundform des Trägermoduls anlehnen. So kann der Aufnahmebehälter beispielsweise auch eine quadratische oder rechteckige Grundfläche aufweisen. Insgesamt kann der Aufnahmebehälter kubisch oder aber auch bevorzugt quaderförmig ausgestaltet sein. Für den Aufnahmebehälter können sich insbesondere Grundformen anbieten, welche vollständig geschlossene Wände und eine Öffnungsmöglichkeit in Form einer Verschlussklappe aufweisen. Die Batterie wird in den Aufnahmebehälter eingeführt und die Verschlussklappe wird geschlossen. Zum Anschluss an die Medienversorgung des Trägermoduls weist jeder Aufnahmebehälter eine Aufnahmebehälter-Anschlussstelle auf, welche dazu eingerichtet ist an die Medienversorgung des Trägermoduls angeschlossen zu werden. Durch die Anschlussstelle können gezielt die im Trägermodul verlaufenden Medien in den einzelnen Aufnahmebehälter geleitet werden. So ist es beispielsweise möglich, dass über diese Aufnahmebehälter-Anschlussstelle eine Stromversorgung des Aufnahmebehälters etabliert wird. Es ist aber auch möglich, dass an der Anschlussstelle Flüssigkeiten oder Gase anliegen, welche bei Bedarf, beispielsweise durch Öffnen eines Ventils, direkt in den einzelnen Aufnahmebehälter geleitet werden können. Die Anschlussstelle ermöglicht insofern das Durchleiten einer oder mehrerer Medien in den Aufnahmebehälter hinein. Die dafür nötigen Stecker/Buchsen, Verbindungen oder Ventile sind dem Fachmann bekannt. Als Funktion der Ausgestaltung des Trägermoduls kann jeder Behälter auch eine Weiterleitung der Medienversorgung zu mindestens einem weiteren Aufnahmebehälter bereitstellen. Die Medien gelangen also über das Trägermodul zu mindestens einem ersten Behälter und können dann über Medienversorgungsleitungen am Behälter zu einem weiteren Behälter weitergeleitet werden. Es ist aber auch möglich, dass das Trägermodul die Weiterleitung der Medien zu jedem einzelnen Behälter bereitstellt. In der letzteren Ausgestaltung entfällt natürlich die Medien-Weiterleitung über die Behälter.

Der Aufnahmebehälter umfasst einen mit der Buchse verbindbaren Adapter, wobei der Adapter dazu eingerichtet ist, eine elektrische und/oder hydraulische und/oder gasdichte Verbindung zwischen der Alkali-Ionen-Batterie und der Buchse für die Aufnahmebehälter-Anschlussstelle bereitzustellen. Prinzipiell können mit dem erfindungsgemäßen Logistiksystem zwei unterschiedliche Ausgestaltungen realisiert werden. Zum einen kann im Falle einer Fehlfunktion einer Batterie in einem Aufnahmebehälter die Batterie über das Einleiten von Medien, beispielsweise in Form einer Kühlflüssigkeit oder eines Löschgases, in den Aufnahmebehälter gekühlt oder gelöscht werden. In dieser Ausgestaltung ist aber bevorzugt, dass die Medien nicht in den Aufnahmebehälter als solchen, sondern direkt der Batterie zur Verfügung gestellt werden. Einige Batterietypen sind dazu eingerichtet, dass diese beispielsweise selbst Sensoren zur Überwachung der Batterien und/oder einen eigenen Flüssigkeitskreislauf zur Temperierung oder zur Kühlung der Batterien aufweisen. Durch den Adapter kann die Batterie direkt mit der Aufnahmebehälter-Anschlussstelle verbunden werden. Dies kann den Vorteil aufweisen, dass beispielsweise über eine elektrische Anbindung der Sensoren der Batterie das Signal direkt an das Trägermodul weitergeleitet werden kann. Das Verwenden eigener Sensoren am Aufnahmebehälter oder am Modul wäre in diesem Fall nicht nötig. Auch kann durch die Nutzung des Kühlkreislaufes der Batterie, diese mit deutlich geringerem Aufwand im Vergleich zur Kühlung des gesamten Aufnahmeraumes bewerkstelligt werden. Der Adapter kann beispielsweise in Form eines Leitung- oder Schlauchsystems ausgestaltet sein. Des Weiteren kann über den Adapter auch eine elektrische Anbindung an den Batteriespeicher selbst hergestellt werden. Im Falle einer Fehlfunktion oder durch einen gewollten Eingriff, kann der Batterie Strom zu- oder abgeführt werden. Im Falle einer Fehlfunktion der Batterie, kann diese beispielsweise tiefentladen werden. Dies kann das Gefahrenpotential bei der Lagerung verringern. Weiterhin kann die gelagerte Batterie auch gezielt als Funktion der Zeit aufgeladen werden. So lassen sich die Batterien im Wesentlichen strom- oder spannungslos transportieren und die Aufladung erfolgt erst kurz vor dem Einbau der Batterie.

Zur Kühlung der Batterie kann es zwei prinzipielle Möglichkeiten geben. Zum einen kann ein eventuell vorhandenes Batterie-Kühlsystem durch das Logistikmodul nur mit Medien versorgt werden. Dies kann beispielsweise nur Strom sein, wenn die Kühlung der Batterie nur Strom benötigt. Alternativ kann das Logistikmodul eine Batterie ohne eigenes Kühlsystem auch selbst direkt kühlen. Hierzu steht ein Teil des Aufnahmebehälters im thermischen Kontakt mit der Batterie und der thermische Kontakt wird durch Zuführung von Kühlmedien durch das Logistikmodul gekühlt. Im ersteren Fall kann es also ausreichen, dass das Logistikmodul nur Strom bereitstellt. Im letzteren Fall kann die Bereitstellung von Kühlmittel und oder Strom ausreichen. Bevorzugt wird das Kühlmittel in einem geschlossenen Kreislauf zugeführt, sodass in den Aufnahmebehälter kein Kühlmittel austritt. Es ist aber auch möglich, dass Kühlmittel zur direkten thermischen Kühlung der Batterie und, zeitgleich, zur Kühlung des Aufnahmebehälters genutzt wird. Es werden also auch Teile des Aufnahmebehälters gekühlt, welche nicht im direkten thermischen Kontakt mit der Batterie stehen. Dies kann beispielsweise über die Seitenwände oder die Decke des Aufnahmebehälters erfolgen. Je nach Zustand der Batterie, beispielsweise bestimmbar über die Temperatur, kann eine sequentielle oder parallele Kühlung sowohl des Behälters wie auch der Batterie selbst erfolgen.

Innerhalb eines weiter bevorzugten Aspektes dann der Adapter dazu eingerichtet sein eine elektrische und eine hydraulische Verbindung zwischen der Alkali-Ionen-Batterie und der Buchse für die Aufnahmebehälter-Anschlussstelle bereitzustellen, wobei die elektrische Verbindung dazu eingerichtet ist die Alkali-Ionen-Batterie zu Entladen oder zu Laden und die hydraulische Verbindung dazu eingerichtet ist die Alkali-Ionen-Batterie zu temperieren. Insbesondere die Kopplung aus elektrischer Entladung und gleichzeitiger Kühlung der Batterie kann im Gefahrfall eine deutlich höhere Sicherheit für die Batterie, das gesamte System und die Bediener des Systems bereitstellen. Die Temperierung kann dazu beitragen, dass chemische Reaktion im Inneren der Batterie stabilisiert werden. Ein geeigneter Temperaturbereich kann beispielsweise bevorzugt zwischen -20°C und +30°C betragen. Dieser Temperaturbereich kann ein weiteres Durchgehen ungewollter chemischer Reaktionen zumindest temporär verhindern.

In einer bevorzugten Ausgestaltung kann das System als Komponente a) ein Trägermodul umfassen, wobei das Trägermodul eine Rahmenkonstruktion aus mindestens einem Träger-Unterboden, zwei Träger-Seitenwänden, einer mittleren oder hinteren Trägerwand, einer Träger-Oberseite und parallel zum Träger-Unterboden eine oder mehrere horizontal ausgebildete Führungen, welche Einschübe für ein oder mehrere Aufnahmebehälter ausbilden, umfasst, wobei das Trägermodul an der Träger-Oberseite und dem Träger-Unterboden jeweils mindestens eine Anschlussstelle zur Medienversorgung des Trägermoduls und innerhalb oder an der Rahmenkonstruktion verlaufende Medienversorgungsleitungen aufweist, wobei die Medienversorgungsleitungen sich von den Anschlüssen der Medienversorgung des Trägermoduls jeweils bis zu den Einschüben für die Aufnahmebehälter erstrecken und dort jeweils eine Aufnahmebehälter-Anschlussstelle ausbilden. Das Trägermodul stellt also einen Rahmen zur Verfügung, welcher die mechanische Stabilität des gesamten Moduls gewährleisten kann. Der Rahmen begrenzt das Trägermodul zur Umgebung hin. Das Trägermodul weist an sämtlichen, bis auf einer Außenseite, Wände auf. Die Wände können entweder vollflächig oder nicht vollflächig ausgestaltet. Aufgrund der Tatsache, dass die einzelnen Batterien in Aufnahmebehältern vorliegen, ist es auch ausreichend, dass die Außenseiten nur über einzelne Streben oder ein Gitter als Wandelement stabilisiert werden. An der Außenseite des Trägermoduls, welche nicht in einer Wand versehen ist, können die Aufnahmebehälter in das Modul eingeschoben werden. Es ist auch möglich, dass das Trägermodul an zwei Außenseiten keine Wände aufweist. In diesem Fall kann das Trägermodul in der Mitte eine Wand aufweisen, so dass sich das Trägermodul von zwei gegenüberliegenden Seiten mit Aufnahmebehältern bestücken lässt. Es ergibt sich insofern ein sehr symmetrisches Trägermodul. Das Trägermodul weist zum Innenraum hin horizontale Führungen auf, welche den Einschub der einzelnen Aufnahmebehälter erleichtern. Eine Führung kann beispielsweise in der Form eines Kantbleches ausgeführt sein, auf welchem der Aufnahmebehälter in das Trägermodul eingeführt werden kann. Das Trägermodul ist kein rein mechanisches Gebilde, welches die Funktion eines mechanischen Zusammenfassens unterschiedlicher Aufnahmebehälter bewirkt. Zusätzlich zu dieser mechanischen Funktion weist das Trägermodul noch Anschlüsse zur Versorgung mit unterschiedlichen Medien auf. Die Anschlüsse für die Medienversorgung befinden sich einmal auf der Unterseite und auf der Oberseite des Trägermoduls. Über diese Anordnung können mehrere Trägermodule miteinander über die Medienversorgung verbunden werden. Zweckmäßigerweise verlaufen die Anschlüsse an einer Seite des Trägermoduls. Zum Einrichten und zum Aufrechterhalten eines Medien-Kreislaufs werden in der Regel zwei Anschlussstellen benötigt und ausgebildet. Es ist aber auch möglich, dass nur eine Anschlussstelle am Trägermodul etabliert wird. In diesem Fall wird kein Medien-Kreislauf ausgebildet. Es können über die Anschlussstellen am Trägermodul unterschiedliche Medien bereitgestellt werden. So ist es möglich, einen elektrischen, einen Gas-, oder aber einen Flüssigkeitskreislauf mithilfe der Medienversorgung zu etablieren. Die einzelnen Medien werden dann innerhalb des Trägermoduls oder an den Seiten des Trägermoduls entlanggeführt, wobei jeder Aufnahmeraum oder Einschub für einen Aufnahmebehälter mit einem entsprechenden Anschluss, der Aufnahmebehälter-Anschlussstelle, für die durchgeführten Medien versehen ist. Dies dient dem Zweck, dass die einzelnen Medien gezielt von der Medienversorgung des Trägermoduls in die einzelnen Aufnahme Räume für die Aufnahmebehälter geleitet werden können. Neben diesen Grundfunktionen kann das Modul auch noch eine Datenverarbeitungseinheit in Form eines Computers, eine Steuereinheit zur Steuerung der Medien und der Verbindung mit den Aufnahmebehältern und zusätzlich eine Kommunikationseinheit aufweisen. Die Kommunikationseinheit kann beispielsweise den Status des Moduls an eine übergeordnete Logistikeinheit weitergeben.

Innerhalb einer weiter bevorzugten Ausgestaltung des Logistiksystems kann der Aufnahmebehälter mindestens einen Temperatursensor und das Trägermodul oder der Aufnahmebehälter ein Steuermodul umfassen, wobei der Temperatursensor dazu eingerichtet ist die Temperatur der Alkali-Ionen-Batterie im Inneren des Aufnahmebehälters zu messen und die Messsignale über den Adapter und die Buchse an die Aufnahmebehälter-Anschlussstelle weiterzuleiten und wobei das Steuermodul dazu eingerichtet ist als Funktion der Ausgabe des Temperatursensors das elektrische Entladen oder das elektrische Laden der Alkali-Ionen-Batterie und/oder die Temperierung der Alkali-Ionen-Batterie zu steuern. Da die Kühlung einer Batterie nur die Kinetik der Gesamtreaktion verlangsamt, kann durch alleinige Kühlung in vielen Fällen ein späteres thermisches Durchgehen nicht gänzlich verhindert werden. Insofern kann es äußerst sinnvoll sein, dass parallel zur Temperierung eine Tiefenentladung der Batterie initiiert wird. Hierfür kann über das System eine weitere Anbindung bereitgestellt werden, welche die elektrische Energie der Batterie über das Logistikmodul sich und kontrolliert abführt und so die Batterie "entschärft". Da Tiefenentladungsprozess insbesondere im unteren Ladungsbereich aufgrund der elektrischen Belastung zu einem Temperaturanstieg in der Batterie selbst führt, ist die Entladung nur innerhalb eines idealen Temperaturbereichs sicher durchführbar. Eine zu weitgehende Kühlung kann die Batterie in einen Kälteschlaf legen, wodurch ein weiteres Entladen nicht mehr möglich ist. Eine Regelung der Entladespannung in Abhängigkeit der Batterietemperatur kann dazu führen, dass das Entladen der Batterie gestoppt wird, falls die Temperatur außerhalb des sicheren Bereiches zur Entladung liegt. Dazu kann das Modul einen spezifischen Regler aufweisen, welcher Temperatur und Entladespannung und elektrische Entnahme regelt. Alternative kann der Regler auch einen Algorithmus aufweisen, welcher eine stärkere Kühlung der Batterie vorsieht, wenn eine Batterie innerhalb des Temperatur-Toleranzbereichs möglichst schnell entladen werden soll.

Alternativ kann der Aufnahmebehälter mindestens einen Temperatursensor umfassen, wobei der Temperatursensor dazu eingerichtet ist die Temperatur der Alkali-Ionen-Batterie im Inneren des Aufnahmebehälters zu messen und die Messsignale über den Adapter und die Buchse an die Aufnahmebehälter-Anschlussstelle weiterzuleiten. In den Fällen, in denen die Batterien selbst über keine eigenen Sensoren oder keinen Temperatursensor verfügen, kann es hilfreich sein, dass die Temperatur der Batterie im Aufnahmebehälter über einen eigenen Temperatursensor verfolgt wird. Dadurch lässt sich jede einzelne Batterie separat überwachen und es lässt sich sehr genau feststellen, ob eine oder mehrere der Batterien im Logistiksystem einen kritischen Zustand erreicht. Die entsprechenden Gegenmaßnahmen können dann sehr gezielt auf die Batterie oder den Aufnahmebehälter gerichtet werden. Diese Ausgestaltung kann sich auch für die Fälle anbieten, in denen die Batterie selbst einen Sensor aufweist, dieser aber defekt oder nicht extern auslesbar ist. So erreicht man in diesen Fällen ein redundantes System, welches die Transport- und Lagersicherheit für Alkali-Ionen-Batterie nochmals erhöht. Der Temperatursensor kann beispielsweise in Form eines Temperaturfühlers oder einer IR-Kamera ausgestaltet sein. Die Daten können beispielsweise über das Trägermodul ausgelesen und weiterverarbeitet werden. Der Temperatursensor kann beispielsweise im Behälter oder an dem Adapter angebracht sein. Insbesondere die Anbringung am Adapter kann eine physikalische Kontaktierung der Batterie ermöglichen, welches zur schnelleren und besseren Erhebung der Messwerte beitragen kann.

Innerhalb eines weiter bevorzugten Aspektes des Logistiksystems kann die Verschlussklappe des Aufnahmebehälters eine elektrisch steuerbare Verschlussklappe sein, wobei die Verschlussklappe über ein nicht kabelgebundenes elektrisches Signal oder über die Aufnahmebehälter-Anschlussstelle steuerbar ausgestaltet ist. Für die Sicherheit und die Handhabbarkeit des Logistiksystems hat sich als besonders geeignet herausgestellt, dass die Verschlussklappen der Aufnahmebehälter über die Aufnahmebehälter-Anschlussstelle und das Trägermodul steuerbar sind. In dieser Ausgestaltung lässt sich ein Aufnahmebehälter quasi über das Trägermodul fernsteuern und beispielsweise öffnen, schließen, verriegeln. Beispielsweise kann in den Fällen, in denen eine Batterie in einem Aufnahmebehälter eine erhöhte Temperatur aufweist, der Aufnahmebehälter über die Verschlussklappe verriegelt werden, so dass ein unbeabsichtigtes Öffnen des Aufnahmebehälters von außen verhindert wird. Sollte sich die Temperatur der Batterie im Aufnahmebehälter wieder einpendeln oder sollte nach Einleiten der Medien in den Aufnahmebehälter die Temperaturen der Batterie wieder zurückgeführt sein, so kann die Verschlussklappe des Aufnahmebehälters wieder über das Trägermodul entriegelt werden.

In einer weiter bevorzugten Ausführungsform kann die elektrisch steuerbare Verschlussklappe dazu eingerichtet sein, als Funktion der Temperatur des Aufnahmebehälter verriegelt oder geöffnet zu werden. Neben der Verriegelung der Klappe als solche kann es weiterhin hilfreich sein, dass ein Öffnen eines spezifischen Aufnahmebehälters in den Fällen ausgeschlossen ist, in welchen im Inneren des Aufnahmebehälters eine ungewöhnliche Temperatur vorherrscht. Dazu kann es beispielsweise vorgesehen sein, dass die betreffende Verschlussklappe erst nach Bestätigung weiterer Sicherheitseinrichtungen geöffnet werden kann.

In einer weiter bevorzugten Ausführungsform des Logistiksystems kann der Träger-Unterboden an mindestens zwei Ecken jeweils eine Anschlussstelle für Medien umfassen, wobei die Anschlussstellen jeweils die Anschlüsse zur Medienversorgung des Trägermoduls an der Träger-Unterseite umfassen. Das Trägermodul kann bevorzugter Weise entweder eine quadratische oder eine rechteckige Grundfläche aufweisen. Für diese Fälle hatte sich als besonders günstig herausgestellt, dass die Medienversorgung des Trägermoduls an der Trägerunterseite über die Modul ecken erfolgt. Die Ecken des Trägermoduls können zu diesem Zweck besonders mechanisch stabilisiert ausgeführt sein. Dies kann die Stabilität des gesamten Trägermoduls, den mechanischen Schutz der Versorgungsleitungen und insbesondere auch die Stapelbarkeit der Gesamtkonstruktion erhöhen. Zum Aufbau eines Medienkreislaufes über mehrere Module hinweg, mit zumindest einer Zuführung und einer Ableitung der einzelnen Medien, hat sich dabei das symmetrische Ein- und Ausbringen der Medien über die Ecken des Trägermoduls als besonders geeignet herausgestellt. Diese Ausgestaltung kann insbesondere im Vergleich zu einer Zuführung über die Mitte des Trägermoduls besonders robust und langlebig sein.

Innerhalb eines bevorzugten Aspektes des Logistiksystems kann die Träger-Oberseite mindestens zwei Anschlussstellen umfassen, wobei die Kontaktflächen jeweils die Anschlüsse zur Medienversorgung des Trägermoduls an der Träger-Oberseite ausbilden, und dazu eingerichtet sind, mit den unteren Anschlussstellen der Rahmenkonstruktion zu wechselwirken. Zur Ausbildung eines Medienkreislaufes über mehrere Trägermodule hinweg hat sich als besonders günstig herausgestellt, dass das Trägermodul an der Oberseite Kontaktflächen aufweist, welche die Medien an andere Trägermodule weitergeben können. Durch diesen Aufbau können einzelne Medienstränge über mehrere Trägermodule geführt werden. Es können aber auch gesamte Kreisläufe, beispielsweise in Form von Kühlkreisläufen aufgebaut werden, welche sämtliche Logistiksysteme eines Lagerortes oder aber auch einer Transportmöglichkeit miteinander verbinden. Dieser Gesamtaufbau über mehrere Logistiksysteme hinweg kann die Komplexität der Medienversorgung deutlich verringern.

In einer weiter bevorzugten Ausführungsform des Logistiksystems kann das Trägermodul im Bereich der Einschübe für die Aufnahmebehälter eine Verriegelungseinheit aufweisen, wobei die Verriegelungseinheit elektrisch schaltbar und dazu eingerichtet ist den Aufnahmebehälter mechanisch oder magnetisch am Trägermodul zu fixieren. Zur Sicherung des Aufnahmebehälters im Trägermodul kann es sinnvoll sein, dass der Aufnahmebehälter mechanisch am Trägermodul fixierbar ist. Dies kann durch eine Verriegelungseinheit erreicht werden, welche beispielsweise über die Medienversorgung schaltbar ist. Die Verriegelungseinheit kann dazu ausgerüstet sein, dass der Aufnahmebehälter nicht mehr ohne mechanischen Kraftaufwand aus dem Trägermodul entfernt werden kann. Die Verriegelungseinheit kann beispielsweise ein pneumatisch oder elektrisch schaltbarer Riegel oder Haken sein, welcher in ein entsprechendes Gegenstück am Aufnahmebehälter eingreift. Des Weiteren ist es möglich, dass die mechanische Anbindung des Aufnahmebehälters am Trägermodul über einen Elektromagneten gesteuert wird, welcher den Aufnahmebehälter erst dann mechanisch lösbar freigibt, wenn der Elektromagnet stromlos geschaltet wird.

Innerhalb einer weiter bevorzugten Ausgestaltung des Logistiksystems kann der Aufnahmebehälter nicht lösbar am Trägermodul fixiert sein. Das System kann in den Fällen, in denen überwiegend baugleiche Batterien transportiert oder gelagert werden sollen, deutlich mechanisch stabiler ausgestaltet werden, indem die Aufnahmebehälter fest mit dem Trägermodul verbunden sind. Diese Ausgestaltung verringert die Flexibilität des Systems, der Gewinn an mechanischer Belastbarkeit kann unter den genannten Voraussetzungen aber diesen Nachteil ausgleichen.

In einer weiteren Ausgestaltung des Logistiksystems kann der Aufnahmebehälter im Inneren eine Fixierungseinheit aufweisen, wobei die Fixierungseinheit dazu eingerichtet ist die Batterie innerhalb des Aufnahmebehälter mechanisch oder magnetisch zu fixieren und wobei die Fixierungseinheit über die Buchse der Aufnahmebehälter-Anschlussstelle steuerbar ausgestaltet ist. Zum sicheren Transport der Alkali Ionen Batterien kann es sinnvoll sein, dass der Bewegungsspielraum der Batterien im Aufnahmebehälter eingeschränkt wird. Um möglichst viele unterschiedliche Batterietypen mit dem erfindungsgemäßen Logistiksystem transportieren zu können hat sich als günstig erwiesen, dass die Aufnahmebehälter größer ausgestaltet sind als die eigentlichen Batterien. Um ein verstärktes hin- und herbewegen der Batterien im Aufnahmebehälter zu verhindern kann es sinnvoll sein, dass die Batterien im Aufnahmebehälter mechanisch oder elektrisch festgesetzt werden. Dies kann insbesondere dann vorteilhaft sein, wenn die Batterien über eine weite Strecke transportiert werden müssen. Die Fixierungseinheit kann beispielsweise aus elektrisch oder pneumatisch schaltbaren Greifarmen bestehen, welche zumindest die Seitenflächen der Batterien im Aufnahmeraum erfassen und somit die Beweglichkeit der Batterien im Aufnahmeraum einschränken.

In einer weiter bevorzugten Ausführungsform des Logistiksystems kann die Fixierungseinheit dazu eingerichtet sein die Alkali-Ionen-Batterie zu temperieren. Neben einer reinen Haltefunktion kann es auch sinnvoll sein, dass die Fixierungseinheit Mittel zur direkten Kühlung der Batterie bereitstellt. Zusätzlich dazu kann die Fixiereinheit auch räumlich flexibel anpassbar ausgestaltet sein, sodass die Batterie auch bei einer plötzlichen Deformation gegen ein Verrutschen sicher geschützt wird. Die Kühlung der flexibel positionierbaren Fixiereinheit kann dazu führen, dass auch bei nicht vorhersehbaren Verformungen der Batterie diese sicher umschlossen und gleichzeitig auch noch weiter sicher gekühlt wird.

Des Weiteren erfindungsgemäß ist die Verwendung eines erfindungsgemäßen Logistiksystems zur Lagerung oder zum Transport von Lithium-Ionen-Batterien. Das erfindungsgemäße Logistiksystem aus Transportmodul und Aufnahmebehälter kann sich insbesondere dazu eignen, dass Lithium-Ionen-Batterien sicher gelagert und transportiert werden können. Insbesondere Lithium-Ionen-Batterien können während des Gebrauchs und innerhalb der Herstellungskette beträchtliche Mengen an elektrischer Energie aufweisen. Zum sicheren Transport schon vorgeladener Batterien und zur sicheren Entsorgung von Batterien am Ende der wirtschaftlichen Lebensdauer, hat sich das erfindungsgemäße System als sehr hilfreich herausgestellt. Mittels des Systems können die einzelnen Batterien sicher gehandhabt werden. Auch ist es möglich, dass am Ende der Lebensdauer von Batterien auftretende elektrische Fehlzustände sicher gehandhabt werden können. Dazu trägt insbesondere bei, dass die einzelnen Batterien isoliert voneinander in den Aufnahmebehälter transportiert werden können. Der erfindungsgemäße Aufbau über das Trägermodul ist zudem geeignet, dass die einzelnen Batterien überwacht und sehr spezifisch im Gefahrenfall geeigneten Gegenmaßnahmen ausgesetzt werden können. Insbesondere letzteres kann den Verlust einer gesamten Lager- oder Transporteinheit verhindern und die Sicherheit für die Mitarbeiter erhöhen.

Weitere Vorteile und vorteilhafte Ausgestaltungen der erfindungsgemäßen Gegenstände werden durch die Figuren veranschaulicht und in den nachfolgenden Beispielen erläutert. Dabei ist zu beachten, dass die Figuren nur beschreibenden Charakter haben und nicht dazu gedacht sind, die Erfindung in irgendeiner Form einzuschränken.

Es zeigen die
Fig. 1 eine erfindungsgemäße Ausgestaltung eines Träger-Unterbodens in einer Aufsicht;
Fig. 2 eine erfindungsgemäße Ausgestaltung eines Träger-Unterbodens in einer Ansicht von unten;
Fig. 3 eine erfindungsgemäße Ausgestaltung eines Trägermoduls in einer Aufsicht;
Fig. 4 eine erfindungsgemäße Ausgestaltung eines Trägermoduls in einer Seitenansicht;
Fig. 5 eine erfindungsgemäße Ausgestaltung eines Trägermoduls in einer Seitenansicht;
Fig. 6 eine erfindungsgemäße Ausgestaltung eines Trägermoduls in einer Seitenansicht mit Aufnahmebehältern;
Fig. 7 eine erfindungsgemäße Ausgestaltung eines Bodens eines Aufnahmebehälters;
Fig. 8 eine erfindungsgemäße Ausgestaltung eines Bodens eines Aufnahmebehälters.

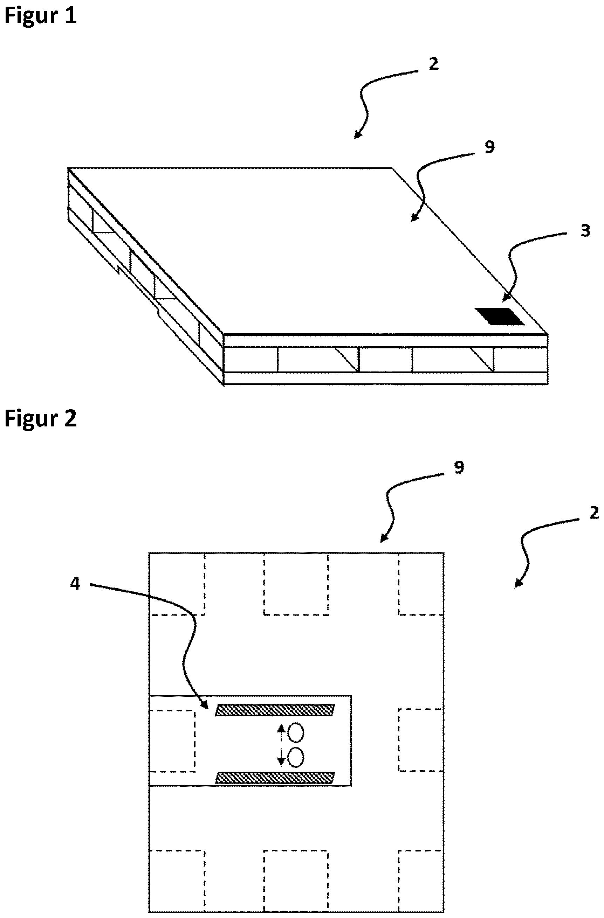

Die Figur 1 zeigt eine erfindungsgemäße Ausgestaltung eines Träger-Unterbodens 9 in einer Aufsicht. In dieser Ausgestaltung wird das Trägermodul 2 nur durch einen Träger-Unterboden 9 ausgebildet. Der Träger-Unterboden 9 des Trägermoduls 2 weist eine Anschlussstelle zur Medienversorgung des Trägermoduls auf (nicht dargestellt, unterhalb des Trägermoduls 2) und in dieser Ausgestaltung innerhalb der Rahmenkonstruktion verlaufende Medienversorgungsleitungen (nicht dargestellt). Die Medienversorgungsleitungen erstrecken sich von den Anschlüssen der Medienversorgung des Trägermoduls (nicht dargestellt) jeweils bis zu mindestens einem der Aufnahme für die einen Aufnahmebehälter (nicht dargestellt) und bilden dort eine Aufnahmebehälter-Anschlussstelle 3 aus. Die Anschlussstelle für die Medienversorgung des Trägermoduls 2 kann an der Unterseite oder aber auch an der Rückseite des Trägermoduls 2 angeordnet sein. Die Medienversorgungsleitungen verbinden die Anschlussstelle des Trägermoduls 2 mit der Aufnahmebehälter-Anschlussstelle 3. Der Träger-Unterboden 9 ist in Form einer Palette ausgestaltet, welches eine einfache Stapelbarkeit mehrere Logistiksysteme für die Lagerung und den Transport gewährleistet. Das Trägermodul 2 kann neben dem Träger-Unterboden 9 noch weitere Aufbauten aufweisen (nicht dargestellt), welche die Aufnahme der Aufnahmebehälter (nicht dargestellt) erreichen können. In dieser Ausgestaltung kann der Aufnahmebehälter auf den Träger-Unterboden 9 gesetzt und durch weitere technische Maßnahmen (nicht dargestellt) auf diesem fixiert werden.

Die Figur 2 zeigt eine erfindungsgemäße Ausgestaltung eines Trägermoduls 2 in einer Ansicht von unten. In dieser Ausgestaltung ist die Medienversorgung 4 des Trägermoduls 2 eher mittig unterhalb des Trägermoduls 2 auf dem Träger-Unterboden 9 angebracht. In diesem Fall ist dargestellt, dass zwei unterschiedliche Medien in der Medienversorgung 4 des Trägermoduls 2 im Träger-Unterboden 9 vorliegen. Diese unterschiedlichen Medien können gemeinsam nebeneinander oder über getrennte Wege bis zur einer oder mehreren Aufnahmebehälter-Anschlussstellen 3 geführt werden. Über die Aufnahmebehälter-Anschlussstellen 3 können beispielsweise flüssige Löschmittel, gasförmige Löschmittel, flüssige Kühlmittel, gasförmige Kühlmittel, elektrische Signalleitungen, Stromleitungen oder Kombinationen mindestens zweier Medien daraus geführt werden.

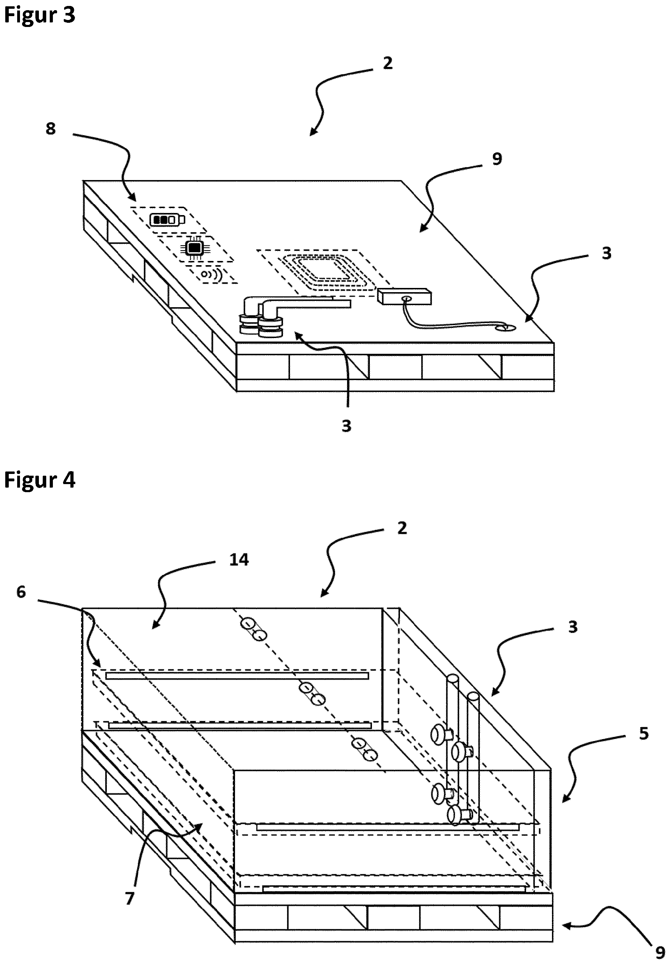

Die Figur 3 zeigt eine erfindungsgemäße Ausgestaltung eines Trägermoduls 2 in einer Ansicht von oben. In dieser Darstellung ist der Träger-Unterboden 9 als Teil des Trägermoduls 2 gezeigt, welcher in weiteren erfindungsgemäßen Ausgestaltungen auch mit Seitenwänden (nicht dargestellt) und einer Träger-Oberseite (nicht dargestellt) verbunden sein kann. Auf der Träger-Unterseite 9 sind zwei Aufnahmebehälter-Anschlussstellen 3 dargestellt, welche zur besseren Visualisierung jeweils mit Adaptern dargestellt sind, welche im Sinne der Erfindung nicht zum Trägermodul 2, sondern zum Aufnahmebehälter (hier nicht dargestellt) gehören. Es ist des Weiteren dargestellt, dass das Trägermodul 2 noch weitere Vorrichtungen aufweisen kann. Zu diesen weiteren Vorrichtungen können beispielsweise Rechner 8, Datenverarbeitungsanlagen, Speicher oder Kommunikationsmittel gehören. In dieser Figur sind eine Recheneinheit 8, eine Bluetooth- oder WLAN-Kommunikationseinheit und eine Speichereinheit für Batterietemperaturen dargestellt. Letztere können in der Rechnereinheit 8 integriert sein.

Die Figur 4 zeigt eine erfindungsgemäße Ausgestaltung eines Trägermoduls 2 in einer Seitenansicht. Das Trägermodul 2 weist einen Träger-Unterboden 9 als Teil des Trägermoduls 2 auf. Das Trägermodul weist neben dem Träger-Unterboden 9 auch zwei Trägermodul Seitenwände 5 und eine Träger-Oberseite 14 auf. Am Trägermodul sind Aufnahmebehälter-Anschlussstellen 3 angebracht, welche Medien, welche durch das Trägermodul 2 geleitet werden, zu den Aufnahmebehälter-Aufnahmeräumen 7 transportieren. In diese Aufnahmebehälter-Aufnahmeräume 7 lassen sich die Aufnahmebehälter (nicht dargestellt) über horizontal ausgebildete Führungen 6 einführen. Durch die Aufnahmebehälter-Anschlussstellen werden die Aufnahmebehälter mit Medien vom Trägermodul 2 versorgt. In dieser Figur ist eine Ausgestaltung mit 2 Aufnahmeräumen 7 dargestellt. Es können auch mehr als zwei Aufnahmeräume 7 ausgebildet werden. Die Medienversorgung der Aufnahmebehälter kann dabei nur über die Aufnahmebehälter-Anschlussstellen 3 des Trägermoduls 2 erfolgen. Es ist aber auch möglich, dass das Trägermodul 2 nur eine Aufnahmebehälter-Anschlussstelle 3 für den auf dem Trägerboden 9 aufliegende Aufnahmebehälter bereitstellt. Die Versorgung der weiteren Aufnahmebehälter kann ebenfalls über einer Verbindung vom ersten Aufnahmebehälter oberhalb des Trägerboden 9 zu den entsprechen oberhalb angeordneten Aufnahmebehältern erfolgen. Alternativ kann das Trägermodul jeden Aufnahmebehälter separat versorgen. Des Weiteren sind in dieser Figur die zwei Träger-Seitenwände 5 dargestellt.

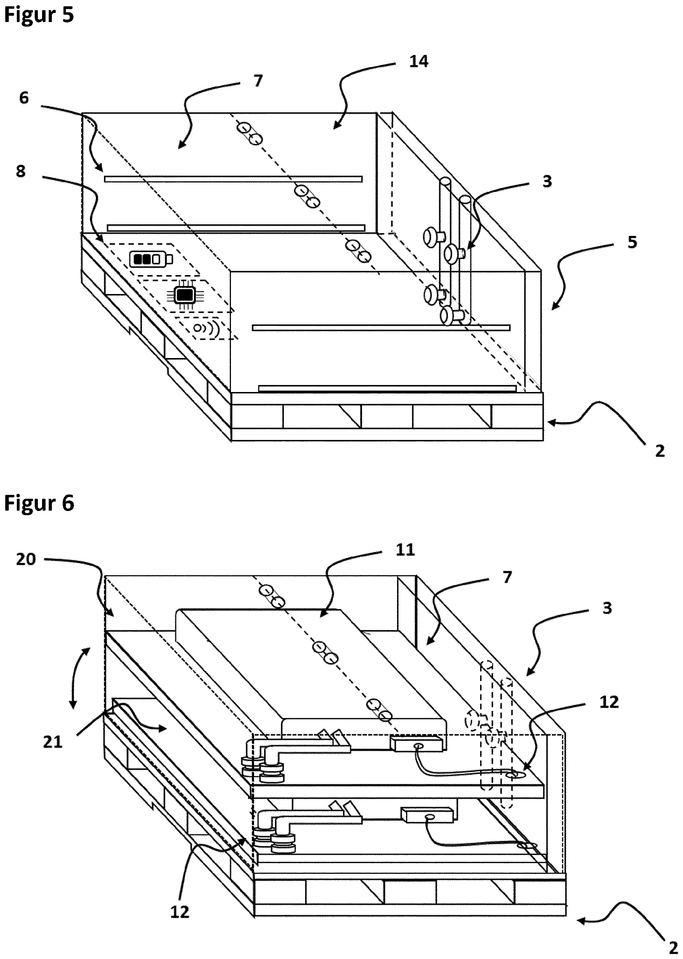

Die Figur 5 zeigt eine ähnliche Ausgestaltung des Trägermoduls 2 mit Träger-Boden 9, zwei Aufnahmebehälter-Anschlussstellen 3 für jeweils einen Aufnahmeraum, die horizontal ausgebildeten Führungen 6, auf welche jeweils ein Aufnahmeraum 10 (nicht dargestellt) geschoben werden kann. Die Führungen 6 definieren in diesem Fall die Aufnahmebehälter-Aufnahmeräume 7. Des Weiteren sind die zwei Träger-Seitenwände 5 dargestellt. Das Trägermodul 2 kann im Träger-Boden 9 noch weitere technische Merkmale in Form einer Rechnereinheit 8 mit WLAN- oder Bluetooth-Anbindung und Temperaturspeicher aufweisen.

Die Figur 6 zeigt eine erfindungsgemäße Ausgestaltung eines Trägermoduls 2 in einer Seitenansicht mit Aufnahmebehältern 20. Es sind zwei übereinander angeordnete Aufnahmebehälter 20 gezeigt, welche jeweils eine Batterie 11 tragen. Die Aufnahmebehälter 20 sind in die Aufnahmeräume 7 eingeschoben und kontaktieren in diesen die Aufnahmebehälter-Anschlussstellen 3 jeweils über eine Buchse (nicht dargestellt). Von den Aufnahmebehälter-Anschlussstellen 3 werden die Medien jeweils einzeln über die Buchsen über einen mit der Buchse verbindbaren Adapter 12 geführt. In dieser Figur werden zwei Adapter 12 dargestellt, welche unterschiedliche Medienkreisläufe mit der Batterie 11 verbinden. Jeder Aufnahmeraum 20 stellt also über das Trägermodul 2 unabhängig von den anderen Aufnahmeräumen 20 eine eigene Medienversorgung bereit, welche als Funktion der physikalischen Batteriesituation einzeln schaltbar ist. Die Frontseite der Aufnahmebehälter 20 ist verriegel- und verschwenkbar ausgeführt, sodass diese als steuerbare Verschlussklappe 21 des Aufnahmebehälters 20 elektrisch betätigt werden kann. Die einzelnen Aufnahmebehälter 20 können mechanisch oder magnetisch gegeneinander oder gegen das Trägermodul 2 verriegelt werden

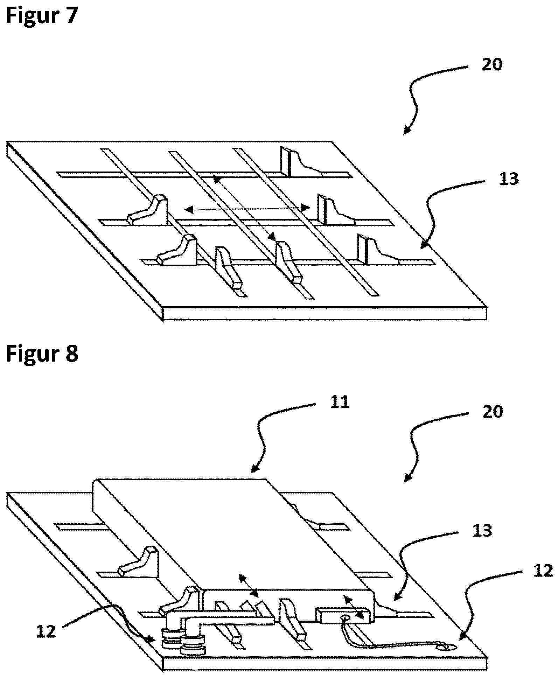

Die Figur 7 zeigt eine erfindungsgemäße Ausgestaltung eines Bodens eines Aufnahmebehälters 20. In dieser Ausgestaltung weist der Boden eines Aufnahmebehälters 20 eine mechanische Fixierungseinheit 13 auf, wobei die Fixierungseinheit 13 dazu eingerichtet ist die Batterie (nicht dargestellt) innerhalb des Aufnahmebehälter 20 mechanisch zu fixieren. Die Fixierungseinheit 13 ist über die Buchse (nicht dargestellt) der Aufnahmebehälter-Anschlussstelle steuerbar ausgestaltet. Die Fixierungseinheit 13 ist mechanisch so flexibel ausgestaltet, dass eine Vielzahl unterschiedlicher Batterietypen aufgenommen und sicher fixiert werden kann. Die Fixiereinheit 13 kann über die Buchse (nicht dargestellt) in Verbindung mit der Aufnahmebehälter-Anschlussstelle 3 (nicht dargestellt) über das Trägermodul (nicht dargestellt) gesteuert werden.

Die Figur 8 zeigt eine erfindungsgemäße Ausgestaltung eines Bodens eines Aufnahmebehälters mit einer darauf angeordneten mechanischen Fixierungseinheit 13, welche eine Batterie 11 innerhalb des Aufnahmeraumes festhält. Die Batterie wird über zwei Adapter 12 mit Medien versorgt, wobei die Adapter 12 über die Buchse und die Aufnahmebehälter-Anschlussstellen (nicht dargestellt) mit der Medienversorgung des Trägermoduls (nicht dargestellt) verbunden sind. Es können beispielsweise über die Adapter 12 Kühlmedien geführt werden. Des Weiteren ist es möglich, dass die Temperatur über einen Temperatursensor im oder am Ende des Adapters 12 gemessen und die Messdaten an das Trägermodul (nicht dargestellt) weitergeleitet werden. Hier können die Daten ausgewertet und Gegenmaßnahme bei Gefahrensituationen eingeleitet werden. Es ist auch möglich, dass nach der Auswertung der Daten die Verriegelung des Aufnahmeraumes (nicht dargestellt) freigegeben wird.

## Patentansprüche

1. Logistiksystem zur Lagerung und zum Transport von Alkali-Ionen-Batterien (11) aufweisend ein rechteckiges oder quadratisches Trägermodul (2) und mindestens einen Aufnahmebehälter (20) für Alkali-Ionen-Batterien (11) zur Aufnahme in das Trägermodul (2), wobei
a) das Trägermodul (2) eine Rahmenkonstruktion aus mindestens einem Träger-Unterboden (9) umfasst, wobei das Trägermodul (2) an dem Träger-Unterboden (9) mindestens eine Anschlussstelle zur Medienversorgung (4) des Trägermoduls (2) und innerhalb oder an der Rahmenkonstruktion verlaufende Medienversorgungsleitungen aufweist, wobei die Medienversorgungsleitungen sich von den Anschlüssen der Medienversorgung (4) des Trägermoduls (2) bis zu mindestens einer Aufnahme (7) für einen Aufnahmebehälter (20) erstrecken und dort eine Aufnahmebehälter-Anschlussstelle (3) ausbilden, wobei die Medienversorgung des Trägermoduls (2) ausgewählt ist aus der Gruppe bestehend aus flüssigen Löschmitteln, gasförmigen Löschmitteln, flüssigen Kühlmitteln, gasförmigen Kühlmitteln, elektrischen Signalleitungen, Stromleitungen oder Kombinationen mindestens zweier Medien daraus; und
b) der oder die Aufnahmebehälter (20) mindestens eine Boden-, eine Kopf-, eine Rück- und zwei Seitenwände sowie eine bewegliche Vorderwand in Form einer Verschlussklappe (21) aufweisen, wobei mindestens eine Wand des Aufnahmebehälters eine mit der Aufnahmebehälter-Anschlussstelle (3) verbindbare Buchse umfasst, wobei der Aufnahmebehälter (20) einen mit der Buchse verbindbaren Adapter (12) umfasst, wobei der Adapter (12) dazu eingerichtet ist eine elektrische und/oder hydraulische und/oder gasdichte Verbindung zwischen der Alkali-Ionen-Batterie (11) und der Buchse für die Aufnahmebehälter-Anschlussstelle (3) bereitzustellen.

2. Logistiksystem nach Anspruch 1, wobei der Adapter (12) dazu eingerichtet ist eine elektrische und eine hydraulische Verbindung zwischen der Alkali-Ionen-Batterie (11) und der Buchse für die Aufnahmebehälter-Anschlussstelle (3) bereitzustellen, wobei die elektrische Verbindung dazu eingerichtet ist die Alkali-Ionen-Batterie (11) zu Entladen oder zu Laden und die hydraulische Verbindung dazu eingerichtet ist die Alkali-Ionen-Batterie (11) zu temperieren.

3. Logistiksystem nach Anspruch 2, wobei der Aufnahmebehälter (20) mindestens einen Temperatursensor (8) und das Trägermodul (2) oder der Aufnahmebehälter (20) ein Steuermodul und umfasst, wobei der Temperatursensor (8) dazu eingerichtet ist die Temperatur der Alkali-Ionen-Batterie (1) im Inneren des Aufnahmebehälters (20) zu messen und die Messsignale über den Adapter (12) und die Buchse an die Aufnahmebehälter-Anschlussstelle (3) weiterzuleiten und wobei das Steuermodul dazu eingerichtet ist als Funktion der Ausgabe des Temperatursensors (8) das elektrische Entladen oder das elektrische Laden der Alkali-Ionen-Batterie (1) und/oder die Temperierung der Alkali-Ionen-Batterie (11) zu steuern.

4. Logistiksystem nach einem der vorhergehenden Ansprüche, wobei die Verschlussklappe (21) des Aufnahmebehälters (20) eine elektrisch steuerbare Verschlussklappe (21) ist, wobei die Verschlussklappe (21) über ein nicht kabelgebundenes elektrisches Signal oder über die Aufnahmebehälter-Anschlussstelle (3) steuerbar ausgestaltet ist.

5. Logistiksystem nach Anspruch 4, wobei die elektrisch steuerbare Verschlussklappe (21) dazu eingerichtet ist als Funktion der Temperatur des Aufnahmebehälter (20) verriegelt oder geöffnet zu werden.

6. Logistiksystem nach einem der vorhergehenden Ansprüche, wobei der Träger-Unterboden (9) an mindestens zwei Ecken jeweils eine Anschlussstelle für Medien (4) umfasst, wobei die Anschlussstellen (4) jeweils die Anschlüsse zur Medienversorgung des Trägermoduls (2) an der Träger-Unterseite umfassen.

7. Logistiksystem nach einem der vorhergehenden Ansprüchen, wobei das Trägermodul (2) eine Rahmenkonstruktion aus mindestens einem Träger-Unterboden (9), zwei Träger-Seitenwänden (5), einer mittleren oder hinteren Trägerwand, einer Träger-Oberseite (14) und parallel zum Träger-Unterboden (9) eine oder mehrere horizontal ausgebildete Führungen (6), welche Aufnahmebehälter-Aufnahmeräume (7) für ein oder mehrere Aufnahmebehälter (20) ausbilden, umfasst, wobei das Trägermodul (2) an der Träger-Oberseite und dem Träger-Unterboden (9) jeweils mindestens eine Anschlussstelle zur Medienversorgung (4) des Trägermoduls (2) und innerhalb oder an der Rahmenkonstruktion verlaufende Medienversorgungsleitungen aufweist, wobei die Medienversorgungsleitungen sich von den Anschlüssen (4) der Medienversorgung des Trägermoduls (2) jeweils bis zu den Aufnahmebehälter-Aufnahmeräume (7) für die Aufnahmebehälter (20) erstrecken und dort jeweils eine Aufnahmebehälter-Anschlussstelle (3) ausbilden.

8. Logistiksystem nach Anspruch 7, wobei das Trägermodul (2) im Bereich der Aufnahmebehälter-Aufnahmeräume (7) für die Aufnahmebehälter (20) eine Verriegelungseinheit aufweist, wobei die Verriegelungseinheit elektrisch schaltbar und dazu eingerichtet ist den oder die Aufnahmebehälter (20) mechanisch oder magnetisch am Trägermodul (2) zu fixieren.

9. Logistiksystem nach einem der Ansprüche 1 bis 7, wobei der Aufnahmebehälter (20) nicht lösbar an dem Trägermodul (2) fixiert ist.

10. Logistiksystem nach einem der vorhergehenden Ansprüche, wobei der Aufnahmebehälter (20) im Inneren eine Fixierungseinheit (13) aufweist, wobei die Fixierungseinheit (13) dazu eingerichtet ist die Batterie (11) innerhalb des Aufnahmebehälter (20) mechanisch oder magnetisch zu fixieren und wobei die Fixierungseinheit (13) über die Buchse der Aufnahmebehälter-Anschlussstelle steuerbar ausgestaltet ist.

11. Logistiksystem nach Anspruch 10, wobei die Fixierungseinheit (13) dazu eingerichtet ist die Alkali-Ionen-Batterie (11) zu temperieren.

12. Verwendung eines Logistiksystems nach einem der vorhergehenden Ansprüche zur Lagerung oder zum Transport von Lithium-Ionen-Batterien (11).
